# EUROPEAN PATENT APPLICATION

(11) **EP 0 724 322 A1**
(43) Date of publication of application: **31.07.1996**
(21) Application number: 96100570.9
(22) Date of filing: 16.01.1996
(51) Int. Cl.: H02K 1/22, H02K 15/02

(54) **Permanent magnet, particularly a rotor for electric motors**

(30) Priority: 20.01.1995 IT TO950037
(71) Applicant: ELECTRO-PARTS S.p.A., I-12060 Bossolasco (CN) (IT)
(72) Inventor: Falcone, Giovanni, I-14100 Asti (IT)
(74) Representative: Cerbaro, Elena

(57) **Abstract**

A permanent magnet (1) presenting an injection-molded, one-piece annular body (2), which is so magnetized as to present a number of alternating, oppositely-magnetized portions (4), and is magnetized during molding by applying opposite magnetic fields to adjacent sections of the mold. A number of annular bodies (2, 2') may be connected side by side axially to form an axially larger and hence more powerful magnet; and the flat faces (9, 11) of the elementary side by side annular bodies present locating members (10, 12) for accurately centering the adjacent annular bodies.

## Description

The present invention relates to a permanent magnet, particularly for use as a rotor in electric motors.

Permanent magnets forming the rotors of electric motors consist of annular bodies comprising a supporting element, and a number of opposite poles alternating circumferentially and comprising sectors of ferromagnetic material or similar, which are appropriately polarized and then fitted to the supporting body. The above fabrication method involves several problems and is relatively expensive, due to the various steps for producing the parts (supporting body and sectors), polarizing the sectors and fitting them to the support.

It is an object of the present invention to provide a permanent magnet and a fabrication method designed to overcome the drawbacks typically associated with the known technique.

According to the present invention, there is provided a permanent magnet, particularly for use as a rotor in an electric motor; characterized in that it comprises at least a one-piece injection-molded annular body presenting a number of alternately magnetized portions.

A number of preferred, non-limiting embodiments of the present invention will be described by way of example with reference to the accompanying drawings, in which:
Figure 1 shows a front view of a first embodiment of the magnet according to the present invention;
Figure 2 shows a cross section of the Figure 1 magnet;
Figure 3 shows a brushless electric motor featuring a second embodiment of the magnet according to the present invention;
Figure 4 shows a front view of a third embodiment of the magnet according to the present invention;
Figure 5 shows a cross section of the Figure 4 magnet;
Figure 6 shows a schematic view of part of a mold for producing the Figure 1 magnet;
Figure 7 shows a block diagram of the steps in the fabrication of the magnet according to the present invention;
Figure 8 shows a graph of the flux of a four-pole magnet according to the present invention.

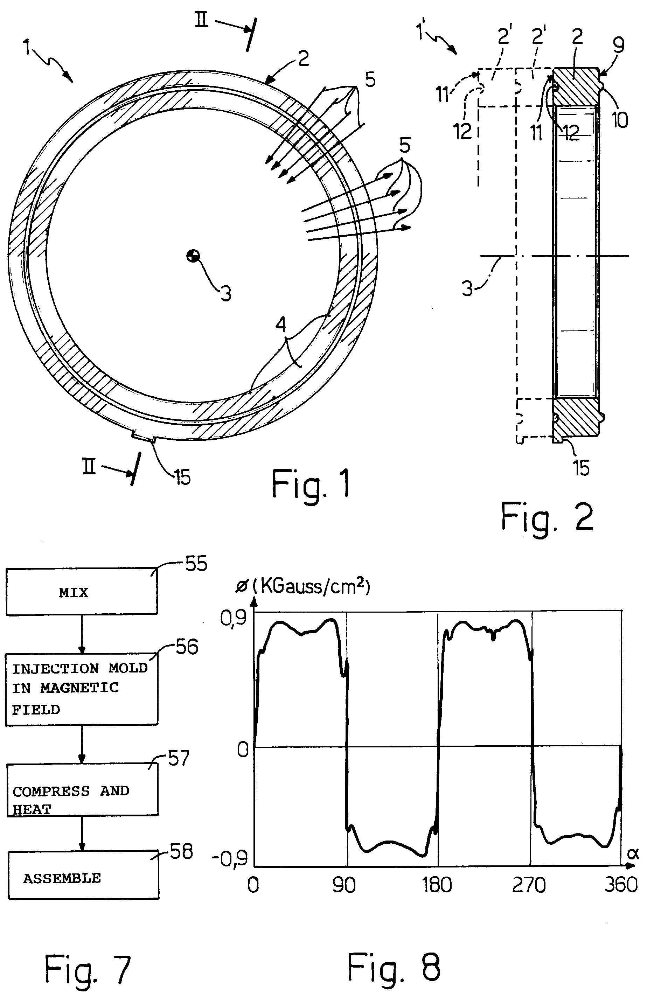

Number 1 in Figure 1 indicates a permanent magnet comprising a one-piece annular body 2 presenting a rotation axis 3 and made of magnetizable material, preferably ferrite or rare earth (NdFeBa), mixed with thermoplastic material (e.g. nylon) or heat-setting material (melamine). Annular body 2 is so magnetized as to form a number of portions 4 (twelve in Figure 1) polarized radially and in alternate opposite directions (i.e. inwards and outwards) as shown schematically in Figure 1 by arrows 5.

Annular body 2 is injection molded in one piece and simultaneously magnetized, as explained in more detail later on.

In the Figure 1 and 2 embodiment, one flat face 9 of annular body 2 presents a central rib 10, and the opposite flat face 11 presents an annular groove 12 of exactly the same location and size as annular rib 10, so that, as shown by the dotted line in Figure 2, two or more annular bodies 2 may be connected side by side and centered perfectly to form an axially larger magnet 1' by engaging groove 12 of one annular body 2' and the central rib 10 of an adjacent annular body 2. This solution presents the advantage of producing a single standard size element from which to form a wide range of magnets of an axial size which is a multiple of the standard size.

To enable precise positioning during assembly, annular body 2 presents a peripheral locating projection 15, which, by way of alternative, may be replaced by a recess in the cylindrical outer lateral surface.

In the example shown of a rotor for an electric motor, annular body 2 is fitted to a supporting element.

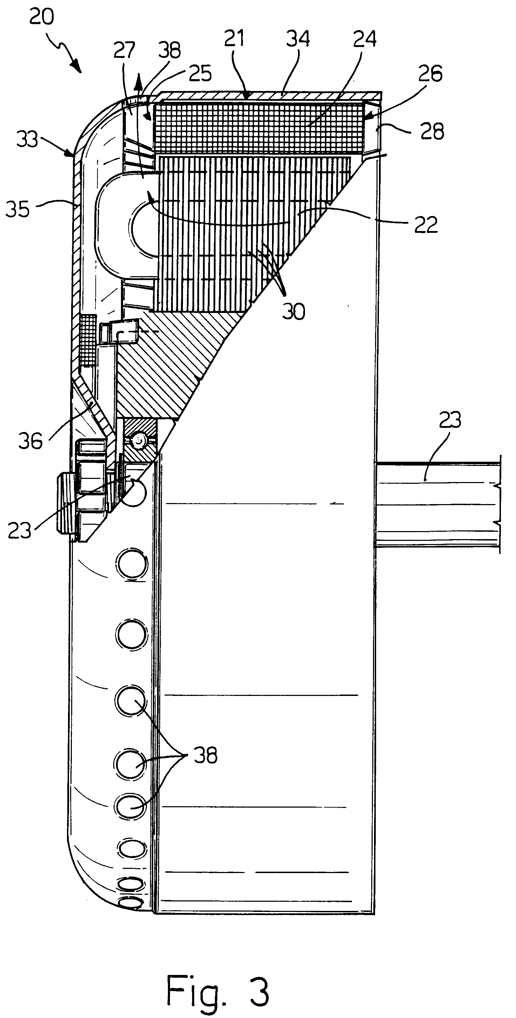

An example of the magnet fitted to a supporting element is shown in Figure 3 relative to a brushless a.c. motor 20, only the main elements of which are shown and described herein, and include an external rotor 21, an internal stator 22, and an output shaft 23 fitted to the rotor.

Rotor 21 in this case comprises an annular body 24 fitted externally with a supporting element 33 which also provides for closing the magnetic circuit and is therefore also made of ferromagnetic material. Annular body 24 is similar to annular body 2 in Figure 1, except that, in place of annular rib 10 and annular groove 12, the two flat faces 25, 26 present equally spaced radial cooling fins 27, 28 co-molded with annular body 24, and which provide for creating a stream of air through the laminations 30 of stator 22. Alternatively, fins may be provided on only one of the two flat faces, e.g. fins 27 on face 25.

Supporting element 33 is bowl-shaped, and comprises a cylindrical wall 34 to which annular body 24 is fitted, and a disk-shaped end wall 35 comprising a sunken central portion 36 fitted to output shaft 23 of the motor.

Close to the point at which it blends with end wall 35, cylindrical wall 34 of supporting element 33 presents a number of circumferential holes 38 for expelling the air flow generated by fins 27, 28.

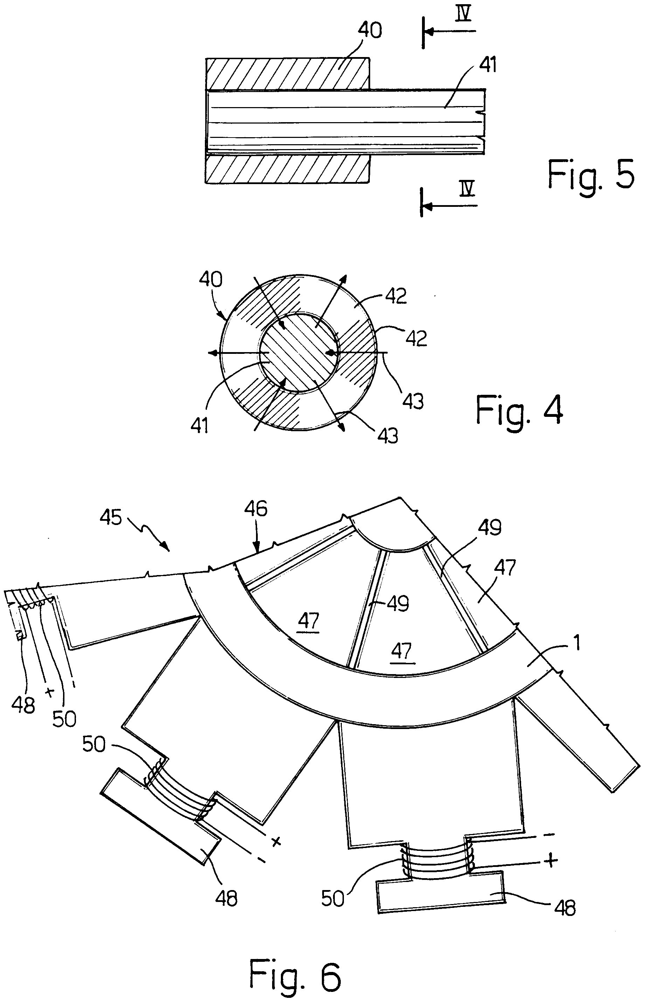

Figures 4 and 5 show a variation of the magnet for use as an inner rotor of a motor. In the example shown, the magnet 40 is fitted to a shaft 41 (in this case, the output shaft of the motor not shown) and presents six poles 42 magnetized radially as shown by arrows 43. As opposed to being solid, as shown, shaft 41 may be hollow.

Figures 6 and 7 show, schematically, part of the mold and the molding steps for fabricating the magnet according to the present invention.

With reference to Figure 6, the mold 45 comprises a half mold 46 in turn comprising a number of inner sectors 47 and an equal number of outer sectors 48, the number of sectors depending on the number of poles required for the magnet. Inner sectors 47 are in the form of sectors of a circle, are made of magnetizable material (e.g. iron), and are separated by insulating elements 49 of diamagnetic material (e.g. copper or lead). Outer sectors 48 are located facing inner sectors 47, are also made of magnetizable material, comprise a narrow portion about which is wound a coil 50, and therefore form the core of an electromagnet, the coil 50 of which is supplied when molding the rotor to ensure it is simultaneously magnetized. The coils 50 of adjacent outer sectors 48 are of course supplied with currents of opposite sign to obtain alternating poles of magnet 1, and insulating elements 49 provide the necessary magnetic insulation for ensuring correct definition of the poles.

The method of fabricating magnet 1 comprises the initial step of thoroughly mixing the ferromagnetic material with the thermoplastic or heat-setting material, as indicated by block 55 in Figure 7. Once the mixture is homogenized, it is hot-injected into mold 45 and, simultaneously with injection of the mixture, coils 50 are supplied. At this step, each of coils 50 generates a magnetic field, the flux lines of which are closed via respective inner sector 47 and respective outer sector 48, so that each radially magnetizes a respective portion 4 of annular body 2. In the case of a magnet forming an inner rotor, annular body 40 may be molded directly on to shaft 41; and, in the event magnet 1 presents fins of the type shown in Figure 3, the mold will be designed accordingly.

Annular body 2 so molded and magnetized is then compressed and/or heated and hardened (block 57), and finally assembled (block 58).

Figure 8 shows a graph of the magnetic flux φ of a magnet 1 of the Figure 1 type with four poles, and illustrates the rapid sign inversion when switching from one pole to the next opposite one.

The fabrication method according to the present invention therefore provides for producing a permanent magnet in one molding operation, with no need for separately molding and assembling the magnetic sectors and the annular support, and as such provides for reducing fabrication and in-process component storage costs.

Clearly, changes may be made to the magnet and fabrication method as described and illustrated herein without, however, departing from the scope of the present invention.

## Claims

1. A permanent magnet (1, 1'), particularly for use as a rotor in an electric motor; characterized in that it comprises at least a one-piece injection-molded annular body (2; 24; 40) presenting a number of alternately magnetized portions (4; 42).

2. A magnet as claimed in Claim 1, characterized in that it comprises a number of elementary one-piece annular bodies (2, 2') arranged axially side by side.

3. A magnet as claimed in Claim 2, characterized in that the two flat faces (9, 11) of each elementary one-piece annular body (2, 2') comprise locating members (10, 12) for adjacent elementary one-piece annular bodies.

4. A magnet as claimed in Claim 3, characterized in that said locating members comprise an annular rib (10) projecting from a first flat face (9), and an annular groove (12) on a second flat face (11); said rib and said groove being complementary in shape.

5. A magnet as claimed in any one of the foregoing Claims, characterized in that said one-piece annular body (2, 2') presents an asymmetric position reference element (15).

6. A magnet as claimed in any one of the foregoing Claims, characterized in that said one-piece annular body (24) comprises cooling fins (27) on at least one (25) of its flat faces (25, 26).

7. A magnet as claimed in any one of the foregoing Claims, characterized in that said one-piece annular body (24) is fitted inside a bowl-shaped supporting element (33) to form the outer rotor (21) of an electric motor (20).

8. A magnet as claimed in any one of the foregoing Claims, characterized in that said one-piece annular body (40) is fitted externally to a shaft (41) to form the inner rotor of an electric motor.

9. A magnet as claimed in any one of the foregoing Claims, characterized in that said magnetized portions (4; 42) are magnetized radially and alternately inwards and outwards of said annular body (2; 40).

10. A magnet as claimed in any one of the foregoing Claims, characterized in that said annular body (2; 24; 40) is made of composite material including magnetizable substances such as ferrite and rare earth, and plastic material such as thermoplastic and heat-setting material.

11. A method of fabricating a permanent magnet as claimed in one or more of the foregoing Claims, characterized in that it comprises injection molding an annular body (2; 24; 40) of magnetizable material in a mold (45), and simultaneously magnetizing said annular body by applying magnetic fields to said mold.

12. A method as claimed in Claim 11, characterized in that said mold (45) comprises a number of sectors (48) of magnetizable material, each wound with a respective coil (50); and the step of magnetizing said annular body comprises applying electric currents of opposite sign to said coils.
